(19) Europäisches Patentamt

European Patent Office

Office européen des brevets

(11) Numéro de publication: **0 266 232**
**A1**

(12) # DEMANDE DE BREVET EUROPEEN

(21) Numéro de dépôt: 87402074.6

(22) Date de dépôt: 17.09.87

(51) Int. Cl.⁴: **B 60 P 1/44**

(30) Priorité: 02.10.86 FR 8613789

(43) Date de publication de la demande:
04.05.88 Bulletin 88/18

(84) Etats contractants désignés: DE NL

(71) Demandeur: M I C Société Anonyme:
Zones Industrielles 1 et 2 BP. 14
F-61201 Argentan Cédex (FR)

(72) Inventeur: Le Gloan, André
Zones Industrielles 1 et 2 BP. 14
F-61201 Argentan Cédex (FR)

Losson, Dominique
Zones Industrielles 1 et 2 BP. 14
F-61201 Argentan Cédex (FR)

Trebutien, Daniel
Zones Industrielles 1 et 2 BP. 14
F-61201 Argentan Cédex (FR)

(74) Mandataire: Lefebure, Gérard et al
Office Blétry 2, boulevard de Strasbourg
F-75010 Paris (FR)

(54) Dispositif de support de hayon élévateur pour véhicule de transport routier.

(57) Ce dispositif de support comprend deux flasques verticaux
(1), destinés à être montés respectivement sur les longerons
(2) du châssis du véhicule, et une poutre porteuse (5) qui est
fixée par sa partie intermédiaire (5a) à la partie inférieure des
flasques (1) et qui est pourvue, à ses extrémités, d'oreilles
et/ou de chapes (6,11) pour l'articulation des bras de levage (7),
d'au moins un bras de stabilisation (12) et d'au moins un vérin
de levage du hayon élévateur. La poutre (5) comporte, à
chacune de ses extrémités, une partie (5b) qui s'étend à partir
de sa partie (5a) vers l'avant du véhicule et qui est espacée
latéralement de l'un des deux flasques (1), et une autre partie
(5c), qui s'étend latéralement vers l'extérieur à partir de
l'extrémité de la partie (5b) la plus éloignée de la partie (5a), et
à laquelle sont fixées les oreilles et/ou chapes (6,11).

FIG.3

Bundesdruckerei Berlin

## Description

Dispositif de support de hayon élévateur pour véhicule de transport routier.

La présente invention concerne un dispositif de support de hayon élévateur pour véhicule de transport routier tel que camion et semi-remorque, comprenant deux flasques destinés à être montés respectivement sur les longerons du châssis du véhicule, de manière à s'étendre verticalement vers le bas à partir desdits longerons, et une poutre porteuse fixée par sa partie intermédiaire aux deux flasques, à la partie inférieure de ceux-ci, de manière à s'étendre transversalement par rapport à l'axe longitudinal du véhicule, ladite poutre étant pourvue, à chacune de ses extrémités, d'oreilles et/ou de chapes pour l'articulation des bras de levage, d'au moins un bras de stabilisation et d'au moins un vérin de levage du hayon élévateur.

Les hayons élévateurs du type décrit ci-dessus sont bien connus et sont par exemple décrits dans le brevet FR. 2 574 723 de la demanderesse ou dans le brevet FR. 2 502 556. Généralement, les deux flasques sont boulonnés ou soudés sur les longerons du châssis du vehicule, mais ils peuvent être également montés longitudinalement mobiles sur lesdits longerons par l'intermédiaire de glissières dans le cas de certains hayons connus repliables et rétractables sous le châssis du véhicule. L'implantation des hayons élévateurs connus sur le châssis du véhicule requiert l'existence d'une distance convenable entre l'arrière du véhicule et les mains, c'est-à-dire les attaches, des ressorts de suspension de l'essieu arrière du véhicule. La configuration de certain de ces véhicules ne libère pas toujours cette distance convenable. C'est le cas notamment des semi-remorques, dont l'essieu arrière est très reculé. C'est aussi le cas lorsqu'on se propose d'équiper un véhicule d'un hayon repliable et rétractable sous le châssis du véhicule.

La présente invention a donc pour but de permettre l'implantation d'un hayon élévateur sur le châssis d'un véhicule, même lorsque l'espace disponible entre l'arrière de celui-ci et les mains des ressorts de suspension de l'essieu arrière est relativement faible, sans qu'il soit nécessaire de réduire la longueur des bras de levage et des vérins du hayon élévateur.

A cet effet, le dispositif de support du hayon élévateur de la présente invention est caractérisé en ce que ladite poutre porteuse comporte, à chacune de ses extrémités, une première partie extérieure qui s'étend à partir de la partie intermédiaire de la poutre porteuse, sensiblement perpendiculairement à celle-ci, vers l'avant du véhicule et qui est espacée latéralement de l'un des deux flasques, et une seconde partie extérieure qui s'étend latéralement vers l'extérieur à partir de l'extrémité de la première partie extérieure la plus éloignée de la partie intermédiaire de la poutre porteuse, lesdites oreilles et/ou chapes étant fixées auxdites secondes parties extérieures.

L'invention sera mieux comprise à la lecture de la description qui va suivre et qui est donnée en référence aux dessins annexés sur lesquels :

La figure 1 montre, en élévation latérale, la partie arrière d'un véhicule équipé d'un hayon élévateur classique.

La figure 2 est une vue semblable à la figure 1, montrant un hayon élévateur identique à celui de la figure précédente, mais dont le dispositif de support a été modifié conformément à la présente invention pour permettre son implantation sur le châssis d'un véhicule dans lequel l'espace disponible pour ladite implantation à l'arrière du véhicule est plus réduit que dans le cas de la figure 1.

La figure 3 est une vue de dessus du châssis du véhicule et du dispositif de support du hayon élévateur de la figure 2.

La figure 4 est une vue en perspective montrant la poutre porteuse du dispositif de support du hayon élévateur des figures 2 et 3.

La figure 5 est une vue en bout montrant une variante de réalisation de la poutre porteuse.

La figure 6 est une vue en bout montrant une autre variante de la réalisation de la poutre porteuse.

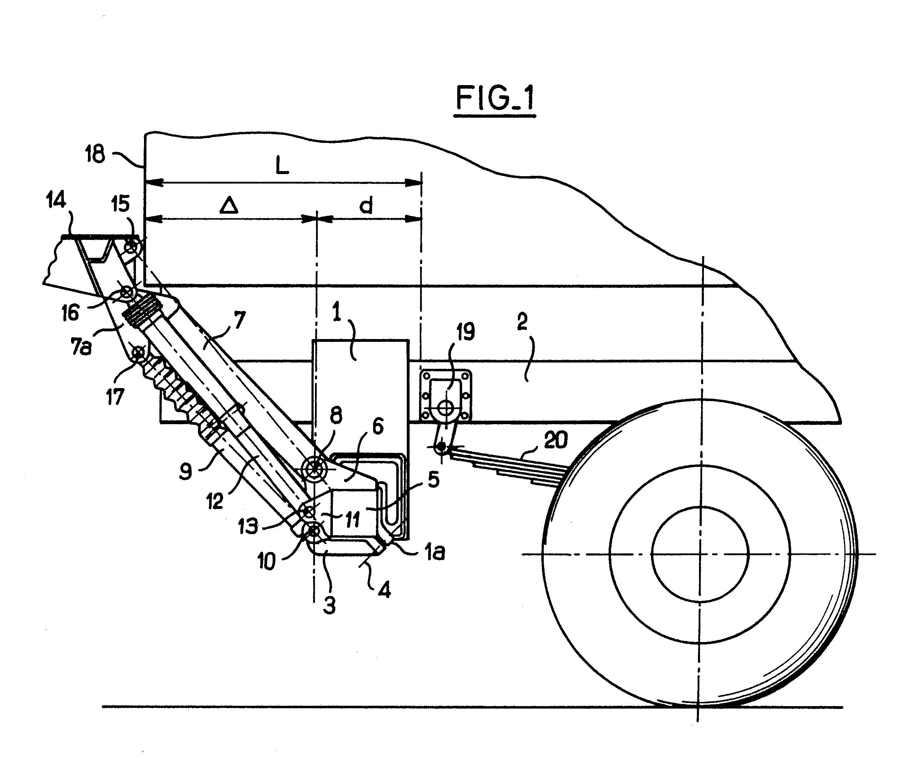

Le hayon élévateur classique montré sur la figure 1 comprend deux flasques 1 (un seul flasque est visible dans la figure 1) qui sont respectivement fixés aux longerons 2 du châssis du véhicule par exemple par soudage ou par boulonnage, bien que dans certains cas ils peuvent être montés mobiles dans le sens longitudinal sur les longerons 2 par l'intermédiaire de glissières. A son extrémité inférieure, chaque flasque 1 comporte une contre-bride 1a coopérant avec une bride 3, attachée à la contre-bride 1a par des boulons 4, pour supporter et maintenir une poutre porteuse 5 ayant par exemple une section transversale carrée. La poutre porteuse 5 s'étend horizontalement et transversalement par rapport à l'axe longitudinal du véhicule et elle a une longueur telle qu'elle s'étend latéralement au-delà des deux flasques 1. A chacune de ses extrémités, la poutre porteuse 5 est pourvue d'une oreille 6 sur laquelle s'articulent l'une des extrémités d'un bras de levage 7 par un axe 8 et l'une des extrémités d'un vérin de levage 9 par un axe 10. Chaque extrémité de la poutre porteuse 5 est en outre pourvue d'une chape 11, qui est légèrement décalée latéralement vers l'extérieur par rapport à l'oreille 6 et sur laquelle s'articule l'une des extrémités d'un bras de stabilisation 12 par un axe 13. Les deux bras de stabilisation 12 peuvent être par exemple constitués par des vérins hydrauliques ou pneumatiques. L'autre extrémité de chaque bras de levage 7 s'articule sur le bord avant du plateau 14 du hayon élévateur par un axe 15. De même, l'autre extrémité de chaque bras de stabilisation 12 s'articule sur le bord avant du plateau 14 par un axe 16. Enfin, l'autre extrémité de chaque vérin de levage 9 s'articule sur un appendice 7a du bras de levage correspondant 7 par un axe 17. De chaque côté du hayon élévateur, le bras de levage 7 et le bras de stabilisation 12 correspondant forment un parallélogramme déformable. Les deux bras de levage 7 sont habituellement reliés rigidement entre eux par un tube transversal de liaison (non montré dans la figure 1), qui est de préférence coaxial aux axes d'articulation 8 et qui permet de synchroniser les mouvements de pivotement des deux bras 7 autour desdits axes.

Bien que le hayon élévateur classique décrit ci-dessus comporte deux vérins de levage 9 et deux bras de stabilisation 12, il peut ne comporter, de façon connue, qu'un seul vérin de levage et un seul bras de stabilisation dans le cas où les charges à charger sur ou à décharger de la plate-forme de chargement du véhicule ont un poids relativement faible.

Pour un hayon élévateur donné et pour un véhicule de transport donné, la cote $\Delta$ (figure 1) est imposée. Cette cote est en gros égale à $1^2 - h^2/4$, $1$ représentant la longueur des bras de levage 7 et h la hauteur de la plate-forme de chargement du véhicule. On voit donc immédiatement qu'avec un hayon élévateur classique du type décrit ci-dessus il est nécessaire de disposer d'un espace L ($L = \Delta + d$) entre l'arrière 18 du véhicule et les mains de ressort 19, auxquelles sont attachés les ressorts 20 de suspension de l'essieu arrière du véhicule, pour permettre l'implantation du hayon élévateur sur les longerons 2.

Dans certains véhicules, l'espace L susindique a une valeur insuffisante pour permettre l'implantation du hayon élévateur sur le châssis du véhicule.

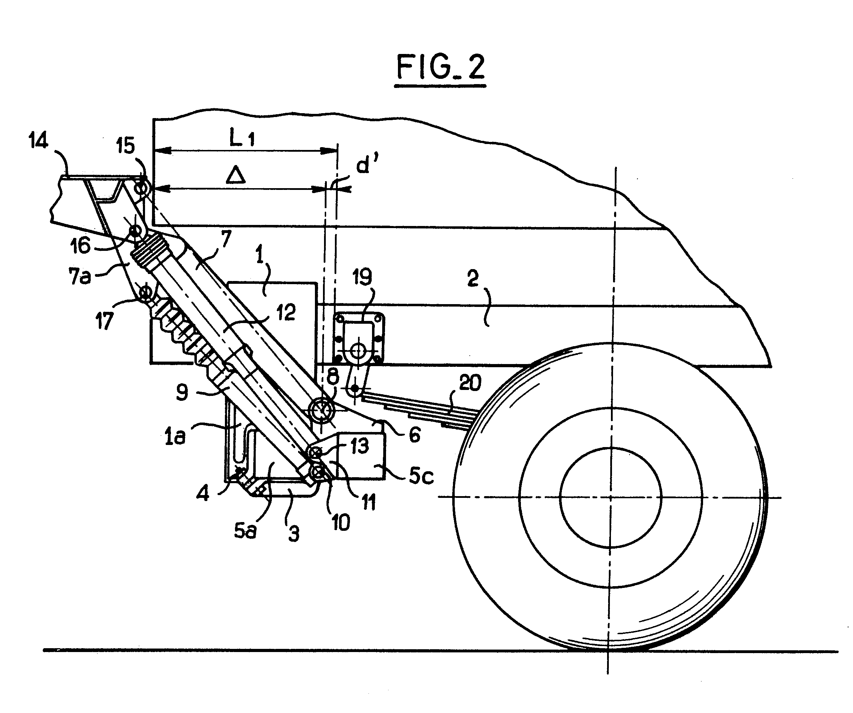

On décrira maintenant comment l'invention permet de résoudre ce problème en faisant référence aux figures 2 à 4, dans lesquelles les éléments du hayon élévateur et du véhicule qui sont identiques ou qui jouent le même rôle que ceux de la figure 1 sont désignés par les mêmes numéros de référence. Les éléments 1, 3, 4 et 6 à 17 du hayon élévateur de la figure 2 peuvent être rigoureusement identiques à ceux du hayon élévateur de la figure 1 et ne seront donc pas décrits à nouveau en détail. On notera simplement que, dans le hayon élévateur de la figure 2, le flasque 1 avec sa contre-bride 1a et la bride 3 a été retournée de 180° autour d'un axe vertical par rapport à la position montrée dans la figure 1.

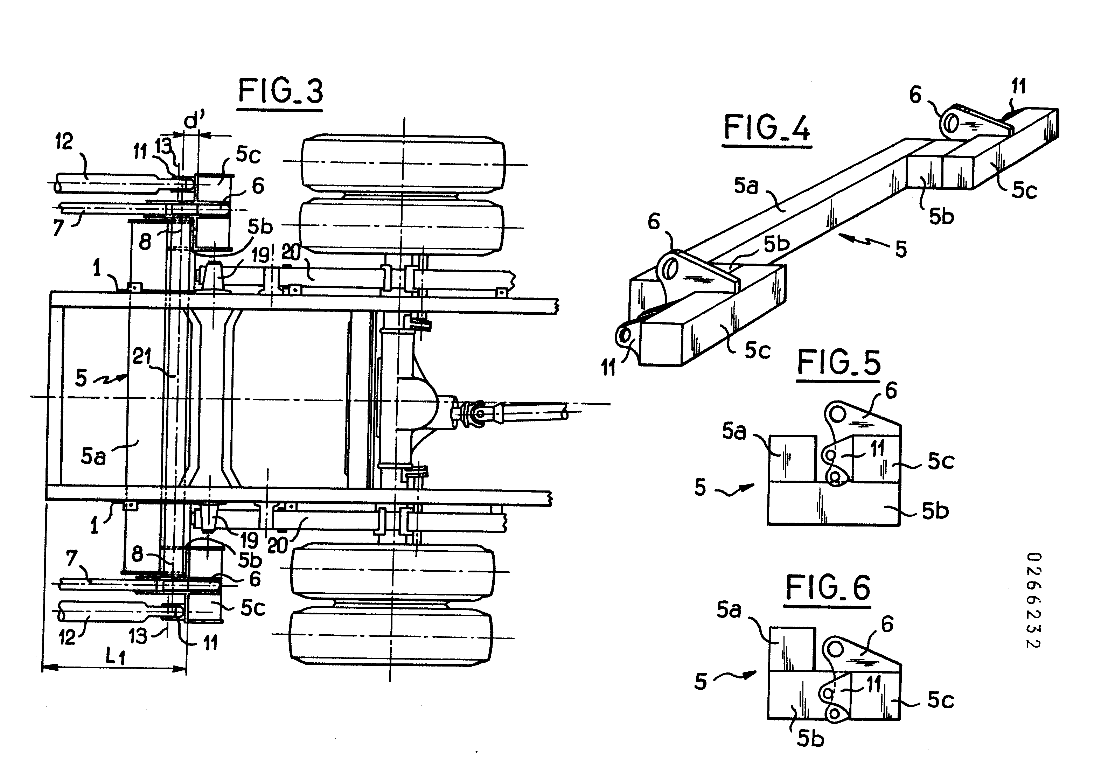

Le hayon élévateur de la figure 2 diffère de celui de la figure 1 en ce que la poutre porteuse 5 n'a plus une forme rectiligne. Comme cela est plus particulièrement visible dans les figures 3 et 4, la poutre porteuse 5 comprend une partie intermédiaire rectiligne 5a, qui est fixée de manière conventionnelle aux deux flasques 1 par les brides 3 et les boulons 4, bien qu'elle puisse être aussi fixée aux flasques 1 par tout autre moyen, par exemple, par soudage. La poutre porteuse 5 comprend en outre, à chacune de ses extrémités, une partie 5b, qui s'étend à partir de la partie intermédiaire 5a, sensiblement perpendiculairement à celle-ci, vers l'avant du véhicule et une autre partie 5c qui s'étend latéralement vers l'extérieur à partir de l'extrémité de la partie 5b la plus éloignée de la partie intermédiaure 5a. Les oreilles 6 et les chapes 11 sur lesquelles s'articulent les bras de levage 7, les vérins de levage 9 et les bras de stabilisation 12, sont fixées par exemple par soudage aux parties extérieures 5c de la poutre porteuse 5. Les deux parties 5b de la poutre porteuse 5 sont fixées respectivement aux extrémités de la partie intermédiaire 5a de celle-ci à une distance suffisante des deux flasques 1 pour que les parties 5b et 5c de la poutre porteuse, les oreilles 6, les bras de levage 7, les axes d'articulation 8 et le tube de liaison 21 (figure 3) qui relie les deux bras de levage 7, n'interfèrent pas avec les mains de ressort 19 ou avec les ressorts de suspension 20 de l'essieu arrière du véhicule.

Les parties 5a, 5b et 5c peuvent être par exemple constituées par des morceaux de tube de section carrée ou de tout autre section polygonale ou circulaire, qui sont fixés rigidement l'un à l'autre par exemple par soudage. Comme montré dans la figure 4, les parties 5a, 5b et 5c de la poutre porteuse 5 sont fixées les unes aux autres de telle manière qu'elles soient coplanaires, leur plan étant de préférence horizontal, c'est-à-dire parallèle au sol, après que la poutre porteuse 5 a été fixée aux flasques 1, bien que ce plan puisse être aussi incliné par rapport au sol si on le désire.

Toutefois, les parties 5a, 5b et 5c de la poutre porteuse 5 peuvent être fixées les unes aux autres de telle manière que les parties 5a et 5c soient dans un premier plan sensiblement horizontal et les parties 5b dans un second plan parallèle au premier plan et situé au-dessous de celui-ci comme montré dans la figure 5, ou de telle manière que la partie 5a soit située dans un premier plan sensiblement horizontal et les parties 5b et 5c dans un second plan parallèle au premier plan et situé au-dessous de celui-ci comme montré dans la figure 6.

Avec le dispositif de support de hayon élévateur de la présente invention, il est clair que la cote d' (figures 2 et 3) séparant l'axe 8 des mains de ressort 19 est notablement réduite par rapport à la cote d de l'arrangement connu de la figure 1. Il en résulte que, pour une même cote imposée $\Delta$, avec le dispositif de support de hayon élévateur de la présente invention, le hayon élévateur peut être implanté sur le châssis d'un véhicule, dans lequel l'espace disponible L, (figures 2 et 3) est nettement plus petit que l'espace disponible L (figure 1) qui etait auparavant nécessaire pour l'implantation du hayon élévateur connu.

Il va de soi que les formes d'exécution de la présente invention qui ont été décrites ci-dessus ont été données à titre d'exemple purement indicatif et nullement limitatif, et que de nombreuses modifications peuvent être facilement apportées par l'homme de l'art sans pour autant sortir du cadre de la présente invention tel qu'il est défini dans les revendications ci-jointes.

**Revendications**

1.- Dispositif de support de hayon élévateur pour véhicule de transport routier tel que camion et semi-remorque, comprenant deux flasques (1) destinés à être montés respectivement sur les longerons (2) du châssis du véhicule, de manière à s'étendre verticalement vers le bas à partir desdits longerons, et une poutre porteuse (5) fixée par sa partie intermédiaire (5a) aux deux flasques, à la partie inférieure de ceux-ci, de manière à s'étendre transversalement par rapport à l'axe longitudinal du véhicule, ladite poutre étant pourvue, à ses extrémités, d'oreilles et/ou de chapes (6,11) pour l'articulation des bras de levage (7), d'au moins un bras de stabilisation (12) et d'au moins un vérin de levage (9) du hayon élévateur, caractérisé en ce que ladite poutre porteuse (5) comporte, à chacune de ses extrémités, une première partie extérieure (5b) qui s'étend à partir de la partie intermédiaire (5a) de la poutre porteuse, sensiblement perpendiculairement à celle-ci, vers l'avant du véhicule et qui est espacée latéralement de l'un des deux flasques (1), et une seconde partie extérieure (5c) qui s'étend latéralement vers l'extérieur à partir de l'extrémité de la première partie extérieure (5b) la plus éloignée de la partie intermédiaire (5a) de la poutre porteuse, lesdites oreilles et/ou chapes (6,11) étant fixées auxdites secondes parties extérieures (5c).

2.- Dispositif de support selon la revendication 1, caractérisé en ce que la partie intermédiaire (5a) et les premières et secondes parties extérieures (5b,5c) de la poutre porteuse (5) sont coplanaires.

3.- Dispositif de support selon la revendication 2, caractérisé en ce que la partie intermédiaire (5a) et les premières et secondes parties extérieures (5b, 5c) sont dans un plan sensiblement horizontal.

4.- Dispositif de support selon la revendication 1, caractérisé en ce que la partie intermédiaire (5a) et les secondes parties extérieures (5c) de la poutre porteuse (5) sont dans un premier plan sensiblement horizontal, tandis que les premières parties extérieures (5b) de la poutre porteuse sont dans un second plan parallèle au premier plan et situé au dessous de celui-ci.

5.- Dispositif de support selon la revendication 1, caractérisé en ce que la partie intermédiaire (5a) de la poutre porteuse (5) est dans un premier plan sensiblement horizontal, tandis que les premières et secondes parties extérieures (5b, 5c) de la poutre porteuse sont dans un second plan parallèle au premier plan et situé au dessous de celui-ci.

# FIG.1

# FIG.2

FIG_3

FIG_4

FIG_5

FIG_6

0266232

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 737 055  (PETTIT)<br>* Colonne 2, ligne 43 - colonne 3, ligne 25; figure 1 *<br>--- | 1,4,5 | B 60 P    1/44 |
| A | DE-A-3 302 681  (BÄR)<br>* Revendication 1; figure 2 *<br>--- | 1-3 | |
| D,A | FR-A-2 574 723  (MIC)<br>* Revendication 1; figure 1 *<br>--- | 1 | |
| A | EP-A-0 049 193  (MANUTIS)<br>* Revendication 1; figures 1-3 * &<br>FR-A-2 502 556 (Cat. D)<br>----- | 1 | |

DOMAINES TECHNIQUES
RECHERCHES (Int. Cl.4)

B 60 P

Le présent rapport a été établi pour toutes les revendications

| Lieu de la recherche | Date d'achèvement de la recherche | Examinateur |
|---|---|---|
| LA HAYE | 04-01-1988 | MAUSSER,T. |

EPO FORM 1503 03.82 (P0402)